(19) Europäisches Patentamt
European Patent Office
Office européen des brevets

(11) EP 0 706 902 B1

(12) **FASCICULE DE BREVET EUROPEEN**

(45) Date de publication et mention
de la délivrance du brevet:
**13.01.1999 Bulletin 1999/02**

(51) Int. Cl.$^6$: **B60B 3/04**, B60B 21/12,
B60C 29/02

(21) Numéro de dépôt: **95115607.4**

(22) Date de dépôt: **04.10.1995**

(54) **Procédé et dispositif de protection des éléments des roues de véhicules**

Verfahren und Vorrichtung zum Schutz von Fahrzeugradteilen

Process and apparatus for protecting parts of vehicle wheels

(84) Etats contractants désignés:
**AT DE ES FR GB IT SE**

(30) Priorité: **12.10.1994 FR 9412263**

(43) Date de publication de la demande:
**17.04.1996 Bulletin 1996/16**

(73) Titulaire:
**COMPAGNIE GENERALE DES
ETABLISSEMENTS
MICHELIN - MICHELIN & CIE
63040 Clermont-Ferrand Cédex (FR)**

(72) Inventeur: **Picherit, Jean-Claude
F-63100 Clermont-Ferrand (FR)**

(74) Mandataire: **Bauvir, Jacques
Michelin & Cie,
Service SGD/LG/PI Ladoux
63040 Clermont-Ferrand Cedex 01 (FR)**

(56) Documents cités:
**EP-A- 0 032 747        DE-A- 4 332 894
US-A- 4 407 348**

Printed by Xerox (UK) Business Services
2.16.7/3.6

## Description

L'invention concerne les roues de véhicule équipées de valves pour le gonflage des pneumatiques, en particulier celles équipées de jantes à base creuse dont le trou de valve est situé dans le fond de la gorge ou dans le flanc de gorge.

Des roues de ce type, fréquemment employées pour les véhicules utilitaires, sont généralement équipées d'une valve dont la tige longe sensiblement la paroi externe de la jante (opposée à la cavité pneumatique), pour aboutir du côté extérieur au véhicule en traversant le disque de roue par un ajour, de façon à rendre accessibles l'embout fileté et son chapeau. Ce faisant, la tige de valve représente une protubérance dans le volume situé entre jante et essieu, volume où sont logés le moyeu et le dispositif de freinage.

On observe parfois des dégonflements intempestifs des pneumatiques, dus à des bris de valve. Des tests de roulage effectués avec des roues équipées de pneumatiques sans chambre à air et montées sur des véhicules roulant sur des pistes empierrées, montrent la possibilité de pénétration de corps étrangers - comme des pierres - dans les cavités entre jante et moyeu et dispositifs de freinage. Avec des essieux munis de freins à disques, on remarque la possibilité de passage, entre le fond de jante et le disque de fiein, de corps étrangers qui se trouvent entraînés en rotation dans ces cavités, et peuvent se trouver coincés entre des pièces y faisant saillie : en particulier entre la tige de valve qui tourne avec la roue et l'étrier de frein qui est fixe, ou entre celui-ci et la jante, du fait de l'irrégularité des formes des objets entraînés tournant sur eux-mêmes. Le passage de corps étrangers dans ces cavités est facilité par l'espace libre entre jante et disque de frein, on observe alors des chocs mécaniques causés par ces corps étrangers coincés entre pièces mobiles et fixes, assez graves pour casser des pièces métalliques comme les tiges de valve ou endommager la jante ou les pièces constituant l'étrier de frein, et le système de freinage en général, ce qui conduit à un manque de sécurité, que ce soit défaut de freinage ou mise à plat brutale, en plus des problèmes de maintenance.

L'invention a pour effets et avantages, d'une part, de diminuer les possibilités de pénétration de corps étrangers dans les cavités entre jante et moyeu, ou du moins de diminuer la taille de ceux qui pourraient encore pénétrer, de faciliter l'évacuation de ceux qui seraient sur le point de pénétrer, ou auraient pénétré dans ces volumes, et d'autre part, de supprimer les risques d'accrochage et d'agression de la tige de valve ou des autres pièces mécaniques en cas de pénétration d'un corps étranger, ce qui améliore la sécurité, la durée de vie du matériel roulant, et diminue les coûts de maintenance.

L'invention concerne un procédé de protection des roues et leurs éléments (valves, jantes, système de freinage) exposés aux chocs dus aux objets étrangers pénétrant dans le volume compris entre la jante, le disque de roue, le moyeu et ses annexes.

L'invention comprend des dispositifs placés dans ce volume et dont les rôles principaux sont de limiter fortement la pénétration de corps étrangers dans ledit volume, et de protéger les éléments de la valve des chocs de ces corps étrangers. L'invention comprend également les roues équipées de ces dispositifs, et leurs procédés de réalisation.

L'invention concerne un procédé de protection d'une roue, caractérisé en ce que l'on occupe au moins partiellement par une matière solide, le volume de révolution V1 délimité par une partie des surfaces de la jante et éventuellement de celle du disque de roue dirigées vers l'essieu, le volume occupé enveloppant ou englobant en un solide de révolution les éléments de la valve situés en dehors de la cavité du pneumatique et à l'intérieur de la roue.

Le volume V1 peut être défini par la rotation autour de l'axe de la roue, d'une surface comprise dans le plan incluant cet axe de rotation et la valve, et délimitée d'une part par la jante et le disque de roue ou les éléments de fixation de la jante, d'autre part par la projection circulaire sur ce plan des éléments de valve.

On entend par " matière solide " toute matière choisie dans les domaines des métaux, ou des matières plastiques, caoutchoucs, résines ou composites, pourvu qu'elle conserve une bonne stabilité dimensionnelle et de bonnes propriétés mécaniques en résistant aux températures au contact de la jante atteintes lors du fonctionnement continu en roulage, et aux pointes de température dues aux freinages.

Le procédé de protection est caractérisé en ce que l'on moule directement la matière de remplissage entre les surfaces de la jante et du disque de roue et de gabarits de moulage, les pièces de la valve pouvant être en place.

Le procédé de protection est caractérisé en ce que la matière solide de protection enveloppe radialement vers l'intérieur de la roue les éléments de valve pour former un solide de révolution dont la surface externe dirigée vers l'essieu est sensiblement continue.

Le procédé de protection est caractérisé en ce qu'un profilé amovible de matière de remplissage est inséré dans le volume compris entre les surfaces sous la jante vers l'intérieur du disque de roue.

L'invention concerne un dispositif permettant la mise en oeuvre du procédé, caractérisé en ce qu'il comprend un solide remplissant en position de montage dans la roue, au moins le volume de révolution V1 défini ci-dessus, cette matière de remplissage pouvant être fixe ou amovible, pleine ou creuse, comportant éventuellement des porosités, le cas échéant ouvertes, et enveloppant radialement vers l'intérieur de la roue, au moins partiellement la surface de révolution engendrée par la rotation de la valve, et sa surface dirigée vers le moyeu étant la plus proche possible d'une surface de révolution et sensiblement sans aspérité, et la zone entourant la valve sensiblement régulière.

D'une manière générale, le dispositif de protection d'une roue comprenant une jante équipée d'une valve formant une protubérance radialement vers l'intérieur de la roue est caractérisé en ce qu'il comprend un solide de révolution, qui en position de montage dans la roue, est adjacent à la jante, et enveloppe radialement au moins partiellement la surface de révolution engendrée par la rotation de la valve autour de l'axe de la roue. Quand la roue est munie d'un disque de roue, le dispositif est caractérisé en ce qu'il est, en position de montage dans la roue, compris entre la jante et au moins un côté du disque de roue.

Le dispositif selon l'invention est caractérisé en ce qu'il comporte une matière de remplissage moulée dans le volume compris entre une partie de la jante, une partie du disque de roue quand il est présent, et la surface de révolution engendrée par la rotation de la valve.

Le dispositif selon l'invention est également réalisable avec un (ou des) profilé(s) sensiblement circulaire(s) de matière forgée, laminée, étirée, roulée, moulée ou extrudée, que l'on introduit dans le volume V1 ou autour du volume V1.

Le dispositif selon l'invention est caractérisé en ce qu'il est formé d'au moins un profilé de matière solide élastiquement déformable de façon non permanente, et que l'on peut introduire dans le volume engendré par la rotation de la valve, et adjacent à la jante.

Le dispositif est caractérisé en ce qu'il comporte un épaulement orienté radialement vers l'intérieur de la roue, axialement vers le disque de frein pour minimiser la surface de passage des corps étrangers entre la jante et le disque de frein, tout en laissant libre l'emplacement dévolu au passage de l'étrier de frein.

Le remplissage du volume protégé peut n'être que très partiel, par exemple dans le cas où la matière protectrice joue le rôle d'une enveloppe pour ce volume. Le dispositif est caractérisé en ce qu'il forme un carter enveloppant radialement vers l'intérieur de la roue, au moins partiellement la surface de révolution engendrée par la rotation de la valve. La limite supérieure de la valeur du volume enveloppé peut être supérieure au volume V1 dans la mesure où au moins une partie de l'épaisseur du profilé passe par dessus la valve, et/ou comporte l'épaulement défini plus haut. Par ailleurs, il n'est pas toujours nécessaire d'englober la totalité de la surface de révolution engendrée par la rotation de la valve, par exemple la surface des parties de valve dépassant à l'extérieur du disque de roue, ou portant le chapeau de valve.

Les profilés utilisables pour les dispositifs de protection peuvent être formés d'une ou de plusieurs pièces logées dans le volume V1 ou l'enveloppant. Un profilé en une seule pièce élastiquement déformable pour passer sous le creux de jante est un mode de réalisation avantageux.

La matière emplissant ou enveloppant le volume de révolution est avantageusement munie d'un évidement permettant le logement de la tige de valve et du pied de valve au voisinage de la jante, de façon à éviter les surépaisseurs.

Un type de réalisation avantageuse consiste dans le choix d'une matière élastique sous la forme d'un anneau fendu transversalement qui peut être déformé de façon non permanente par exemple en passant l'une des extrémités sous l'autre avec réduction du diamètre de l'anneau juste assez pour pouvoir le faire passer sous le creux de jante pour l'introduire dans l'espace de la roue contenant la tige de valve, et en le laissant reprendre sa forme initiale dans le volume V1 ou autour de celui-ci.

Un mode de réalisation ne comportant qu'une seule fente transversale est particulièrement intéressant pour une réalisation et un montage simples et pratiques. Dans ce cas, on préférera que les deux extrémités de la fente à l'état libre de toute contrainte soient séparées par un intervalle, que l'on réduit par déformation élastique du dispositif pour sa présentation en vue de son montage, et son maintien dans la roue.

Un autre mode de réalisation avantageuse consiste dans le choix d'une matière élastique sous la forme d'un anneau fendu ou continu qui peut être déformé de façon non permanente par torsion pour obtenir une forme gauche non plane permettant de la faire passer sous le creux de jante et de laisser l'anneau reprendre sa forme en le positionnant dans le volume V1 ou autour de celui-ci. Selon l'épaisseur de la section de ce profilé, il peut être nécessaire de prévoir un évidement pour le passage de la tige de valve.

Le dispositif selon les modes de réalisation avantageux est caractérisé en ce qu'il est conformé de telle sorte que, en position d'utilisation dans la roue, son maintien en place est assuré par son adhérence et les forces de frottement dans le cas de son moulage en place, ou bien par les forces élastiques et les forces de frottement s'exerçant sur le (ou les) profilé(s) introduit(s) dans la roue après sa (leur) déformation élastique.

Compte tenu de cet aspect intéressant des modes de réalisation décrits, le dispositif ne nécessite pas de moyen supplémentaire de fixation à la roue, ce qui facilite l'obtention de surfaces de révolution dépourvues de protubérance ou de creux, ce qui évite des points d'accrochage avec les corps étrangers qui auraient encore pu s'introduire dans la roue. Des avantages supplémentaires d'un tel dispositif se trouvent aussi dans la facilité et la rapidité de ses opérations de montage ou démontage et des interventions de maintenance.

D'une façon générale, le dispositif selon l'invention est caractérisé en ce que la matière solide de protection enveloppe radialement vers l'intérieur de la roue les éléments de valve pour former un solide de révolution dont la surface externe dirigée vers l'essieu est sensiblement continue et sans aspérité.

Les effets de ces moyens de protection peuvent être avantageusement complétés par la fixation sur l'étrier de frein d'une pièce comportant une surface inclinée par rapport à l'axe de rotation de la roue, de façon à dévier vers le centre du véhicule (vers l'extérieur du volume V1) les corps étrangers qui pourraient s'immiscer entre jante et étrier.

Selon l'invention, la roue pour véhicule comprenant une jante équipée d'une valve formant une protubérance radialement vers l'intérieur de la roue, est caractérisée en ce qu'elle est munie de l'un des dispositifs précités.

Selon l'invention, un procédé de fabrication d'une roue pour véhicule comprenant une jante équipée d'une valve formant une protubérance radialement vers l'intérieur de la roue, est caractérisé en ce qu'il comporte l'utilisation des moyens précités.

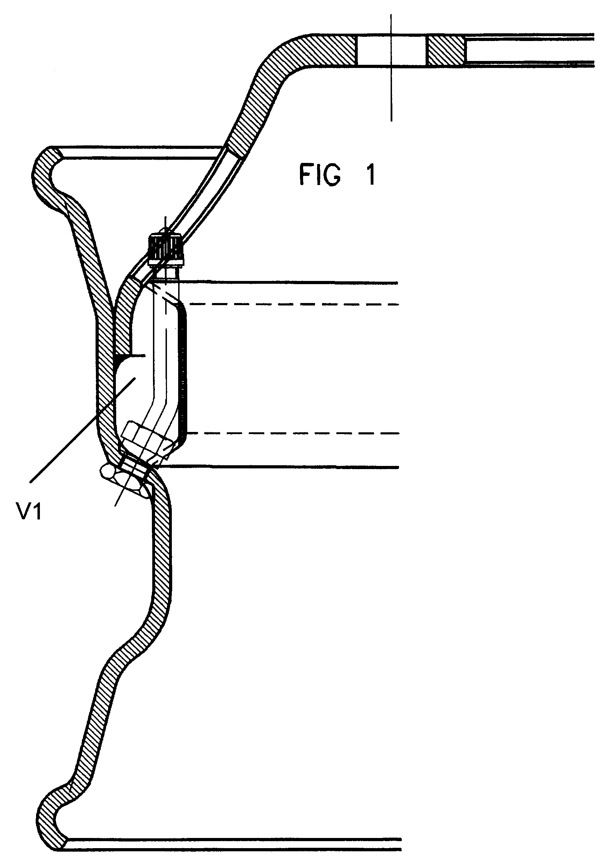

Un exemple d'utilisation d'un profilé de tôle pour une roue de véhicule poids lourd est décrit par les figures 1 à 3.

La figure 1 représente une coupe de la roue par un plan axial sur lequel figure une projection de la valve, la roue étant munie d'un exemple de dispositif selon l'invention.
La figure 2 représente le schéma du dispositif selon la figure 1 :

2.a - vue en plan ;
2.b - section.

La figure 3 représente le dispositif de la figure 1 :

3.a - tel que fabriqué, libre de toute contrainte ;
3.b - en position de présentation d'insertion pour le montage dans la roue, soumis à une contrainte de serrage par des moyens non représentés ;
3.c - en position de montage dans la roue non représentée.

La dénomination courante de la roue concernée selon les nomenclatures ETRTO (European Tire Rim Technical Organisation) ou les normes ISO est :

《 22.5 x 8.25 - 10- 158 》

correspondant à un diamètre de jante au siège de 22,5 pouces soit 571,5 mm avec un disque de roue dont le déport est de 158 mm.

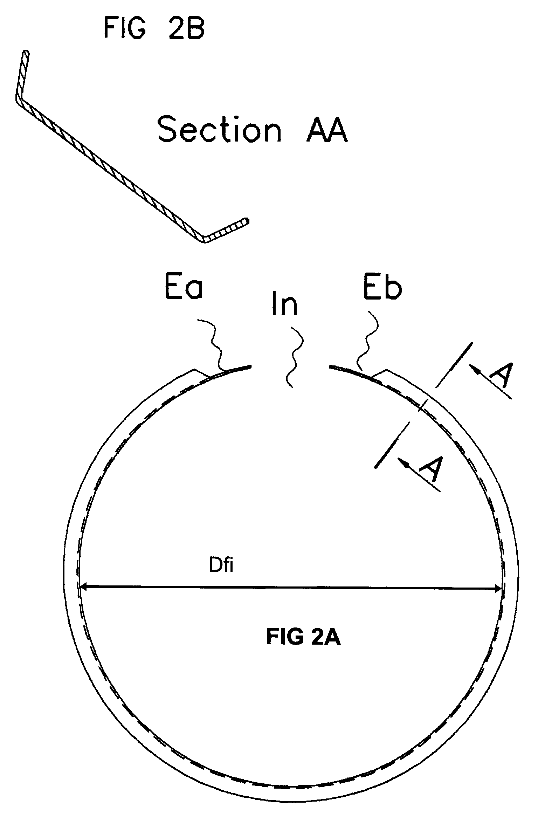

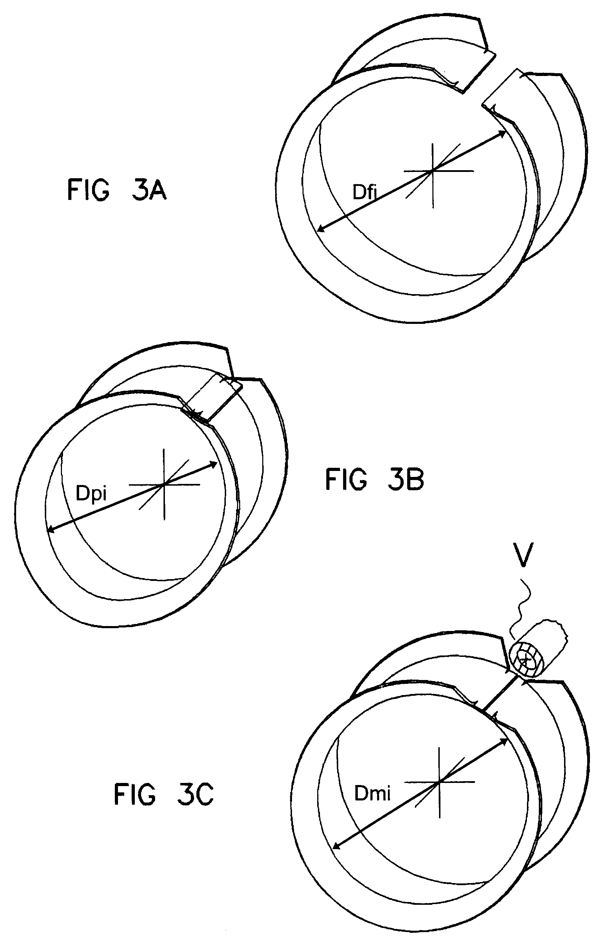

Le profilé peut être réalisé dans une bande de tôle d'acier ordinaire ou d'acier à ressort, dont les dimensions sont proches des suivantes :
Epaisseur : 1,5 mm, Longueur : 1643 mm, Largeur : 81,4 mm mise sous forme d'un anneau en la soudant bout à bout. L'anneau est ensuite roulé pour lui donner un profil en forme de U aplati défini figure 2.b de diamètre de fabrication sous le creux de 523 mm. On en supprime une longueur (In) d'environ 77 mm, pour obtenir un anneau brisé de forme sensiblement circulaire d'un diamètre de fabrication interne (Dfi) d'environ 523 mm, de longueur développée de 1566 mm, laissant entre ses extrémités un intervalle d'environ 77 mm, (In Figure 2.a). A chaque extrémité (Ea, Eb), les ailes du profilé sont supprimées sur 20 à 35 mm, (Figures 2.a, 3.a) ce qui permet de prévoir le passage de la valve (V Figure 3.c), et de faciliter le chevauchement de l'une des extrémités (par exemple Eb) sous l'autre (Ea) de façon à refermer l'anneau par une déformation élastique, (Figure 3.b) pour lui conférer un diamètre local interne de présentation (Dpi) pour l'insertion dans la roue d'environ 472 mm, et un diamètre externe inférieur à 494 mm, ce qui lui permet de passer sous le fond de gorge de la jante considérée.

Pour faciliter le maintien de la position de présentation, chaque extrémité Ea, Eb peut être percée d'un trou permettant le passage d'une pièce de blocage provisoire qui facilite la manipulation de l'anneau refermé. Celui-ci peut alors pénétrer dans la roue par un déplacement axial dans le volume V1, en prenant soin de disposer l'évidement Ea sous la valve. On peut dès lors relâcher les forces maintenant l'anneau en position fermée. L'élasticité de l'anneau provoquant l'écartement de ses extrémités, il atteint sa position de montage (Figure 3.c) pour laquelle les extrémités Ea, Eb sont sensiblement en contact face à face. L'anneau présente alors encore une déformation élastique qui le contraint à un diamètre de montage interne (Dmi) d'environ 498 mm. Les forces élastiques correspondantes plaquent l'anneau sur la surface interne du volume V1 de la roue et le maintiennent en position de protection du volume interne V1 et de la valve.

En cas de besoin, on peut ajouter un blocage supplémentaire de la rotation de l'anneau en munissant une aile du profilé d'au moins une patte la prolongeant dans l'un des ajours du disque de roue. Dans le cas de ce type de fabrication métallique, il est avantageux de protéger les parties du profilé au contact direct avec la jante ou le disque par une matière moins dure (plastique, caoutchouc) pour éviter de blesser le revêtement de surface des roues. Dans le même but, il peut être intéressant de recourber les bords de l'anneau de façon à faire porter le dispositif sur la roue par une surface courbe, et non par une arête.

**Revendications**

1. Dispositif de protection d'une roue comprenant une jante équipée d'une valve formant une protubérance radialement vers l'intérieur de la roue, caractérisé en ce qu'il comprend un solide de révolution qui, en position de montage dans la roue, est adjacent à la jante, et enveloppe radialement, au moins partiellement, la surface de révolution engendrée par la rotation de la valve autour de l'axe de la roue.

2. Dispositif selon la revendication 1, destiné à être utilisé avec une roue munie d'un disque de roue, caractérisé en ce que ledit dispositif en position de montage dans la roue, est compris entre la jante et au moins un côté du disque de roue.

3. Dispositif selon l'une des revendications 1 ou 2, caractérisé en ce qu'il est formé d'au moins un profilé de matière solide élastiquement déformable que l'on peut introduire dans le volume engendré par la rotation de la valve, et adjacent à la jante.

4. Dispositif selon l'une des revendications 1 à 3 caractérisé en ce qu'il comporte un épaulement orienté radialement vers l'intérieur, axialement vers le disque de frein, pour minimiser la surface de passage des corps étrangers entre la jante et le disque de frein, tout en laissant libre l'emplacement dévolu au passage de l'étrier de frein.

5. Dispositif selon l'une des revendications 1 à 4, caractérisé en ce qu'il forme un carter enveloppant radialement vers l'intérieur de la roue, au moins la surface de révolution engendrée par la rotation de la valve.

6. Dispositif selon l'une des revendications 1 à 5, caractérisé en ce qu'il comprend au moins un anneau fendu transversalement.

7. Dispositif selon la revendication 6, caractérisé en ce que cet anneau ne comporte qu'une seule fente transversale.

8. Dispositif selon l'une des revendications 6 ou 7, caractérisé en ce qu'à l'état libre de toute contrainte, les deux extrémités de la fente sont séparées par un intervalle que l'on réduit par déformation élastique du dispositif, pour son montage et son maintien dans la roue.

9. Dispositif selon l'une des revendications 1 à 8, caractérisé en ce qu'il est conformé de telle sorte que, en position d'utilisation, il est maintenu par ses forces de déformation élastique et de frottement dans la roue.

10. Dispositif selon l'une des revendications 1 ou 2 ou 4, caractérisé en ce qu'il comporte une matière de remplissage moulée dans le volume compris entre une partie de la jante, une partie du disque de roue, et la surface de révolution engendrée par la rotation de la valve.

11. Dispositif selon l'une des revendications 1 à 10, caractérisé en ce que la matière solide de protection enveloppe radialement vers l'intérieur de la roue les éléments de valve pour former un solide de révolution dont la surface externe dirigée vers l'essieu est sensiblement continue et sans aspérité.

12. Dispositif selon l'une des revendications 1 à 11, caractérisé en ce qu'il comprend une pièce fixée sur l'étrier de frein et comportant une surface inclinée par rapport à l'axe de rotation de la roue, de façon à dévier vers le centre du véhicule les corps étrangers qui pourraient s'immiscer entre la jante et l'étrier.

13. Roue pour véhicule comprenant une jante équipée d'une valve formant une protubérance radialement vers l'intérieur de la roue, caractérisée en ce qu'elle est munie d'un dispositif selon l'une des revendications 1 à 11.

14. Procédé de fabrication d'une roue pour véhicule comprenant une jante équipée d'une valve formant une protubérance radialement vers l'intérieur de la roue, caractérisé en ce qu'il comporte l'utilisation des moyens de l'une des revendications 1 à 11.

**Claims**

1. A device for the protection of a wheel comprising a rim equipped with a valve forming a protuberance radially towards the interior of the wheel, characterised in that it comprises a revolution solid which, in the position of mounting in the wheel, is adjacent to the rim, and envelops radially, at least partially, the revolution surface generated by the rotation of the valve about the axis of the wheel.

2. A device according to Claim 1, intended to be used with a wheel provided with a wheel disc, characterised in that said device, in the position of mounting in the wheel, is comprised between the rim and at least one side of the wheel disc.

3. A device according to one of Claims 1 or 2, characterised in that it is formed of at least one section of elastically deformable solid material which one can introduce into the volume generated by the rotation of the valve, and adjacent to the rim.

4. A device according to one of Claims 1 to 3, characterised in that it comprises a shoulder directed radially towards the interior, axially towards the brake disc, to minimise the surface of passage of foreign bodies between the rim and the brake disc, whilst leaving free the site intended for the passage of the brake stirrup.

5. A device according to one of Claims 1 to 4, characterised in that it forms a cover enveloping radially towards the interior of the wheel at least the revolution surface generated by the rotation of the valve.

6. A device according to one of Claims 1 to 5, characterised in that it comprises at least one transversely split ring.

7. A device according to Claim 6, characterised in that this ring only comprises a single tranverse slit.

8. A device according to one of Claims 6 or 7, characterised in that in the state free of any stress, the two ends of the slit are separated by an interval which is reduced by elastic deformation of the device, for it to be mounted and held in the wheel.

9. A device according to one of Claims 1 to 8, characterised in that it is shaped such that, in the position of use, it is held by its forces of elastic deformation and friction in the wheel.

10. A device according to one of Claims 1 or 2 or 4, characterised in that it comprises a filling material moulded in the volume comprised between a part of the rim, a part of the wheel disc, and the revolution surface generated by the rotation of the valve.

11. A device according to one of Claims 1 to 10, characterised in that the solid protection material envelops radially towards the interior of the wheel the valve elements to form a revolution solid, the external surface of which, directed towards the axle, is substantially continuous and without roughness.

12. A device according to one of Claims 1 to 11, characterised in that it comprises a fixed piece on the brake stirrup and comprising an inclined surface with respect the rotation axis of the wheel, so as to deflect towards the centre of the vehicle the foreign bodies which could become involved between the rim and the stirrup.

13. A wheel for a vehicle comprising a rim equipped with a valve forming a protuberance radially towards the interior of the wheel, characterised in that it is provided with a device according to one of Claims 1 to 11.

14. A method for the manufacture of a wheel for a vehicle comprising a rim equipped with a valve forming a protuberance radially towards the interior of the wheel, characterised in that it comprises the use of the means of one of Claims 1 to 11.

**Patentansprüche**

1. Vorrichtung zum Schutz eines Rades, das eine Felge aufweist, die mit einem Ventil ausgestattet ist, das eine Ausstülpung radial zur Innenseite des Rades hin bildet,
**dadurch gekennzeichnet, daß**
sie einen festen Rotationskörper aufweist, der in der Montagelage im Rad der Felge benachbart ist und radial mindestens teilweise die Rotationsfläche umhüllt, die von der Drehung des Ventils um die Achse des Rades gebildet ist.

2. Vorrichtung nach Anspruch 1, die dazu bestimmt ist, mit einem Rad benutzt zu werden, das mit einer Radscheibe ausgestattet ist, dadurch gekennzeichnet, daß die genannte Vorrichtung in der Montagelage im Rad zwischen der Felge und mindestens einer Seite der Radscheibe angeordnet ist.

3. Vorrichtung nach einem der Ansprüche 1 oder 2, dadurch gekennzeichnet, daß sie mindestens ein Profil aus festem, elastisch verformbarem Material bildet, das man in den Raum einbringen kann, der von der Drehung des Ventils gebildet ist, sowie der Felge benachbart ist.

4. Vorrichtung nach einem der Ansprüche 1 bis 3, dadurch gekennzeichnet, daß sie eine Schulter aufweist, die zur Innenseite axial gegen die Bremsscheibe ausgerichtet ist, um die Oberfläche für den Durchtritt von Fremdkörpern zwischen der Felge und der Bremsscheibe auf ein Mindestmaß zu verringern, während man gleichzeitig die Stelle freiläßt, der der Durchtritt des Bremssattels zufällt.

5. Vorrichtung nach einem der Ansprüche 1 bis 4, dadurch gekennzeichnet, daß sie ein Gehäuse bildet, das radial zur Innenseite des Rades hin mindestens die Rotationsfläche umhüllt, die von der Drehung des Ventils gebildet ist.

6. Vorrichtung nach einem der Ansprüche 1 bis 5, dadurch gekennzeichnet, daß sie mindestens einen in Querrichtung gespaltenen Ring aufweist.

7. Vorrichtung nach Anspruch 6, dadurch gekennzeichnet, daß der Ring nur einen einzigen Querschlitz aufweist.

8. Vorrichtung nach einem der Ansprüche 6 oder 7, dadurch gekennzeichnet, daß die beiden Enden des Ringes im Zustand, in dem er von jeder Spannung frei ist, durch einen Zwischenraum getrennt sind, der durch die elastische Verformung der Vorrichtung für seine Montage und seine Halterung im Rad verringert wird.

9. Vorrichtung nach einem der Ansprüche 1 bis 8, dadurch gekennzeichnet, daß sie derartig ausgebildet ist, daß sie in der Gebrauchslage durch ihre Kräfte der elastischen Verformung und der Reibung im Rad gehalten ist.

10. Vorrichtung nach einem der Ansprüche 1 oder 2 oder 4, dadurch gekennzeichnet, daß sie ein in dem Raum abgefülltes Füllmaterial aufweist, der zwischen einem Abschnitt der Felge, einem Abschnitt der Radscheibe und der Rotationsfläche vorliegt, die durch die Drehung des Ventils gebildet ist.

11. Vorrichtung nach einem der Ansprüche 1 bis 10, dadurch gekennzeichnet, daß der Feststoff zum Schutz radial zur Innenseite des Rades hin die Elemente des Ventils umhüllt, um einen festen Rotationskörper zu bilden, dessen äußere Oberfläche, die der Nabe zugewandt ist, im wesentlichen durchgehend und ohne Aufrauhung vorliegt.

12. Vorrichtung nach einem der Ansprüche 1 bis 11, dadurch gekennzeichnet, daß sie ein Teil aufweist, das auf dem Bremssattel befestigt ist und eine in Bezug auf die Drehachse des Rades derart geneigte Fläche aufweist, daß die Fremdkörper, die zwischen der Felge und dem Sattel eindringen können, zur Mitte des Fahrzeugs hin abgelenkt werden.

13. Rad für ein Fahrzeug mit einer Felge, die mit einem Ventil ausgestattet ist, das eine Ausstülpung radial zur Innenseite des Rades hin bildet, dadurch gekennzeichnet, daß es mit einer Vorrichtung nach einem der Ansprüche 1 bis 11 versehen ist.

14. Verfahren zur Herstellung eines Rades für ein Fahrzeug, das eine Felge aufweist, die mit einem Ventil ausgestattet ist, das eine Ausstülpung radial zur Innenseite des Rades hin bildet, dadurch gekennzeichnet, daß es die Anwendung von Mitteln eines der Ansprüche 1 bis 11 umfaßt.

FIG 1

V1

FIG 2B

Section AA

Ea  In  Eb

A

A

Dfi

FIG 2A

EP 0 706 902 B1

FIG 3A

FIG 3B

FIG 3C

V